(19) Europäisches Patentamt

European Patent Office

Office européen des brevets

(11) EP 1 359 762 A1

## (12) EUROPEAN PATENT APPLICATION

(43) Date of publication:
05.11.2003 Bulletin 2003/45

(51) Int Cl.$^7$: **H04N 7/26**, H04N 7/50

(21) Application number: 02009885.1

(22) Date of filing: 02.05.2002

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **SIEMENS AKTIENGESELLSCHAFT**
**80333 München (DE)**

(72) Inventors:
• **Illgner-Fehns, Klaus, Dr.**
**81549 München (DE)**
• **Pandel, Juergen, Dr.**
**83620 Feldkirchen-Westerham (DE)**

(54) **Quantizer for scalable video coding**

(57) There is provided a coder/decoder system and a method for encoding and decoding input data at a plurality of different quantization levels. The different quantization levels permit SNR scalability. The system comprises a plurality of quantizer units. Each quantizer unit operates to quantize the input data at a corresponding quantization level. Each quantizer unit applies a quantizer function.

For optimal SNR scalability, the quantizer function applied in each quantizer unit must be embedded. Furthermore the quantizer units must be arranged in a particular processing order so that the mean square error of the prediction error is minimised and so that the quantized prediction error can be perfectly reconstructed.

A suitable quantizer is described.

FIG 5

**Description**

Field of the invention

The present invention relates to the encoding and decoding of video information. In particular, but not necessarily restricted thereto, the present invention relates to the provision of quantizers for improved signal-to-noise ratio (SNR) scalable video coding.

Background to the invention

Video coding systems are presently being developed for a diverse range of technologies including cable television, video conferencing and interactive services for mobile video handsets. As the capacity of communications networks to transfer large amounts of data increases, access to interactive video/audio systems has become increasingly common. Systems and standards capable of supporting such increasing data transfer needs are also being developed.

As a service to customers, communications networks provide a Quality of Service (QoS) guarantee. A certain QoS level will be expected on a given network for each respective type of data transfer. In some circumstances a network user can specify a desired QoS level: for example, the user could define a certain (average) bandwidth for the transfer of a particular data stream. However QoS is not necessarily limited to a constant bandwidth - indeed video streaming itself can demand a varying bandwidth from a network. Several video coding schemes have already been standardised and the standardisation process is still ongoing. The most important body is the Moving Picture Experts Group (MPEG), a working group of researchers and developers who work in conjunction with the International Standards Organisation (ISO/IEC) in the development of standards for coded representation of digital audio and video. Other standards bodies are involved with the development of digital audio and video standards, a further example being ITU-T. To date these standards bodies are responsible for the creation and implementation of several audio and video standards including compression algorithms, processing schemes and authoring environments.

MPEG has produced: the MPEG-1 standard for storage and retrieval of moving pictures and audio; the MPEG-2 standard for digital television; and, more recently, the MPEG-4 standard for multimedia applications. MPEG are currently developing MPEG-7, a content representation standard for multimedia content description interfaces. Of these standards, MPEG-4 is currently the most important.

MPEG-4 provides an object-based coding standard which gives flexibility to authors, service providers and end users of highly interactive, multimedia content. Whilst natural audio and video content (recorded audio and video) is still addressed by MPEG-4, the standard now also addresses the coded representation of synthetic (computer generated) audio and visual objects (AVOs). MPEG-4 was developed to provide the necessary facilities for specifying how AVOs, both natural and synthetic, can be composed together in space and time whilst allowing for interactive delivery. A further focus in the development of the MPEG-4 standard was the performance of coding and transmission of such content within a variety of different scenarios. The standard was consequently designed to accommodate "universal access" to multimedia information by taking into account possible bandwidth-specific problems presented by a wide variety of network situations.

As the example of MPEG-4 illustrates, a practical digital coding system must be prepared to handle data having a range of QoS requirements. Video data can be provided at many different video qualities: for example, different values of spatial and temporal resolution. Furthermore the networks over which the data is transferred will vary significantly in efficiency, bandwidth and delay.

Data transfer channels may have widely fluctuating properties; for example mobile, wireless channels, where the available bandwidth can rapidly change due to channel conditions. As GSM / GPRS does not support QoS, applications must attempt to deal with varying network conditions and provide the best possible quality to the receiver. Although UMTS supports QoS by means of several bearer classes, the changing number of users influences the channel characteristics and even changing bearer classes during a connection must be expected. Therefore, the application must be able to deal with dynamically varying channel and/or network conditions.

Video data can be provided at many different quality levels, e.g. different values for spatial and temporal resolution. Rather than laboriously encoding separate data streams for each of the expected, different levels of quality, it is known to generate a single stream which can be decoded at a plurality of different quality levels, the technique being referred to as scalable video coding. In scalable video coding, the data stream is encoded as a base layer (lowest quality) and at least one further incremental enhancement layer. Incremental enhancement layers only contain information supplemental to the base layer. The base layer information must therefore always be decoded when decoding the video data stream at higher quality levels. A decoder must decode successive complete enhancement layers to enhance the quality of the decoded video stream. Successive enhancement layers depend on every other lower quality layer: i.e. in order to decode layer N all lower quality layers 1 ... N-1 must be decoded as well.

Quality in video coding is not restricted to spatial and temporal resolution, variations in the scale of quantization (i.e. the relative magnitude of quantization steps) has a profound effect on the perceived quality of the decoded video data. Scalable coding can be provided by scaling along a quantization scale in which case the base layer is generated from a "coarse" quantization: where "coarse" refers to the adoption of a high quantization step size. Enhancement layers contain additional information that allows the decoder to increase the precision of each decoded coefficient.

In the digital encoding of video data, the video data is first scanned as still images captured at a predetermined time interval. The individual still images or frames are transferred as a data stream. In general, each frame is predicted with respect to another frame, the other frame already being available to the decoder. Motion compensation of this frame improves the prediction by reducing the mean squared error. The remaining prediction error, the error between the prediction frame and the captured frame, is decorrelated by a mathematical transform. The decorrelating property of the transform concentrates the entropy in a few coefficients with the effect that only a few coefficients must be encoded.

The decorrelation function outputs a set of transform coefficients which still however contain a certain amount of subjectively irrelevant detail and redundancy. The irrelevant data is then removed by the application of one or more quantization function.

In all current standards, prediction is performed in the spatial domain before applying the transform. The mean squared error (MSE) in the prediction error is a measure of how efficient any chosen prediction scheme is.

An important aspect for data transmission is the degree of compression of the data. Data compression reduces the bandwidth required to transmit and store data. Compression is a reversible operation, which converts data from an initial uncompressed data format to a compressed format that requires fewer bits. When required, the operation can be reversed and the original uncompressed data can be reproduced. Compression techniques can be categorised as either lossy compression, where the source data cannot be reconstructed perfectly, or lossless compression, which permits a perfect reconstruction. For still image and video compression a certain degree of information loss may well be tolerable (subjectively barely noticeable), wherefore lossy schemes are typically used for video compression. Additionally lossless techniques are implemented by means of entropy coding.

Usually, lossy compression is achieved by the application of a non-linear (lossy) function to input data: the input data often taking the form of blocks of transform coefficients and the non-linear function broadly termed a "quantizer".

Quantizers, as the name suggests, have the effect of "rounding off" values. They may be considered as many-to-one mappings which simply reduce the number of bits needed to represent the transformed coefficients by reducing the precision of those values - in effect, reducing the number of symbols used to represent original data values in comparison to the 'alphabet' of possible values taken by transform coefficients.

The error introduced by lossy compression, i.e. by quantization, results in a proportionate degradation in quality. Quality metrics for assessing the degree of degradation are generally based on the mean squared error (MSE) between a given original image and the output image after lossy compression.

Quantization can be performed on each individual coefficient, which is known as Scalar Quantization (SQ). Alternatively, quantization can be performed on a group of coefficients together, known as Vector Quantization (VQ). Both uniform and non-uniform quantizers can be used depending on the problem at hand.

The provision of scalability based on a quantization scale is known as SNR scalability. With appropriate multiplexing, it is possible to provide a codec which can handles a single data stream at a plurality of different "coarseness" levels: i.e. a single scalable bitstream. For scalability to be optimal in such a codec the quantizer must be embedded. The term 'embedded' is applied to quantizers as exemplified in the following discussion.

The data at a plurality of different "coarseness" levels may however be transmitted along more than one transmission channel. Indeed it is known to provide a codec which can handle a plurality of streams of data wherein each data stream has a different coarseness level. A discussion of the need for embedded quantizers in such multicast signals may be found in an earlier German Patent Application number DE 10121259.3.

**Detailed Description of the Quantizer**

Let $x$ denote the input to a quantizer $Q_i$, and $y$ the output, where the quantization and reconstruction has been merged into a single operator, $Q$, as follows:

$$Q : y = Q(x).$$

A different quantization level, or step, $Q_i$ is associated with each quantizer $Q_i$. Throughout, the quantization level is denoted by i. The residue, $r_i$, between a differently quantized input value is defined as follows

$$r_i \quad = y_i - y_{i+1}$$
$$= Q_i(x) - Q_{i+1}(x) .$$

A set of quantizers $Q_i$ is said to be embedded, if the following conditions are satisfied:

$$1)\ Q_i(r_i) = r_i$$

$$2)\ Q_{i+1}(r_i) = 0$$

To be embedded, therefore, means that, for each level of quantization, the residue, $r_i$, will always be of smaller magnitude than the quantization step, $Q_i$.

Several quantization approaches are known. One prerequisite is that each quantization level $Q_i$ must satisfy the condition: $Q_{i+1}/Q_i = n$, where n is a natural number. Furthermore, it is not guaranteed, that a certain quantizer will fulfil the second condition: i.e. that $Q_{i+1}(r_i) = 0$.

It has been realised that it is not sufficient only to fulfil the requirements of condition 2) above to select a quantizer. Other criteria that are required to be known/met are: a minimised mean squared error (MSE) of the (quantized) prediction error and the minimization of the entropy of the residual signal $r_i$.

The MSE of the prediction error is a measure of the energy of the prediction error and correlates with the bandwidth necessary to transmit the prediction error.

Minimizing the entropy of the residual signal corresponds to increasing the compression ratio for an input image.

As will be appreciated, it is necessary to take the probability distribution function of the signal into account in order to achieve optimal minimisation of the MSE and the entropy, respectively. The quantizer selection discussed here is constrained by the embeddedness of the quantizer.

These minimisation steps place limitations on the overall rate control and restrict the variability of quantizers operating upon neighbouring image blocks.

In the context of SNR scalable video coding the main goal is, that the prediction errors of different quality levels $d_i$ are embedded. The order of operations along with the type of quantizer determines whether the prediction errors satisfy conditions 1) and 2) above.

It is therefore an object of the invention to obviate or at least mitigate the aforementioned problems.

In accordance with one aspect of the present invention, there is provided codec system for encoding input data at a plurality of different quantization levels, the codec system comprising: a quantizing means which processes said input data and generates a plurality of quantized signals, each of said quantized signals having been quantized at a corresponding quantization level.

The quantizing means preferably comprises a plurality of quantizer units, each quantizer unit being operable to quantize said input signal at a corresponding quantization level.

Each quantizer unit may apply a quantizer function, said quantizer function being an embedded quantizer function.

In accordance with another aspect of the present invention, there is provided a method of encoding an input data stream at a plurality of different quantization levels, the method comprising:

providing at least one quantizer unit;

For a better understanding of the present invention, reference will now be made, by way of example only, to the accompanying drawings in which:-

Figure 1 illustrates a pair of embedded quantizer units;
Figure 2 shows the graph of the effect of the quantizers normally used in the H.263/L standard;
Figure 3 shows the graph of the effect of a modified quantizer having embedded intervals;
Figure 4 illustrates a codec system (System A) where the processing order involves the quantization of the prediction error, $d_i$; and
Figure 5 illustrates a codec system (System B) where the processing order allows the perfect reconstruction of the quantized prediction error.

A range of different quantizers will be used to illustrate the concept of embeddedness. Typical quantizer functions can be formulated as follows with Q denoting the quantizer step size:

$$\text{floor}() \qquad Q: y = \left\lfloor \frac{x}{Q} \right\rfloor \cdot Q$$

$$\text{round}() \qquad Q: y = \left\lfloor \frac{x}{Q} + 0.5 \right\rfloor \cdot Q$$

$$\text{ceil}() \qquad Q: y = \left\lceil \frac{x}{Q} \right\rceil Q$$

$$\text{genfloor}() \qquad Q: y = sgn(x) \left( \left\lfloor \frac{|x|}{Q} \right\rfloor + \alpha \right) \cdot Q$$

$$\text{genrnd}() \qquad Q: y = \left\lfloor \frac{x}{Q} + \alpha \right\rfloor Q$$

$$\text{modrnd}() \qquad Q: y = sgn(x) \left\lfloor \frac{|x|}{Q} + \alpha \right\rfloor Q$$

Here $x$ is an input value before quantization and $y$ is the corresponding quantized (reconstructed) value. Some known quantizers specify an offset, $\alpha \in [0, 1)$, to be made whereby to shift either the quantization interval with respect to the reconstruction value or the reconstruction value with respect to the quantizer interval boundaries. For $\alpha = 0.5$, the quantizer function *genrnd* is identical to *round*.

Using the definition of embeddedness given above, one may check whether a function is embedded. The check for each quantizer function and for values of $\alpha = 0$ and 0.5, is illustrated in Table 1 below. The verification distinguishes between an offset in the quantizer itself and an offset used to check the embeddedness characteristics.

Table 1

| Quantizer | | $Q'_1(r_1) = r_1$ | | $Q'_2(r_1) = 0$ | |
|---|---|---|---|---|---|
| $Q_i$ | $\alpha$ | $\alpha = 0$ | $\alpha = 0.5$ | $\alpha = 0$ | $\alpha = 0.5$ |
| floor | - | yes | | yes | |
| round | - | yes | | no | |
| ceil | - | yes | | yes | |
| genfloor | 0 | yes | yes | yes | yes |
| genfloor | 0.5 | yes | yes | yes | yes |
| genrd | 0 | yes | yes | yes | no |
| genrd | 0.5 | yes | yes | yes | no |
| modrnd | 0 | yes | yes | yes | no |
| modrnd | 0.5 | yes | no | yes | no |

In terms of minimizing the MSE, neither the *floor* quantizer, $\lfloor x \rfloor$, nor the *ceil* quantizer, $\lceil x \rceil$, perform well. Although the *round* operator does minimise the MSE, this quantizer is not embedded.

Accordingly, three other types of quantizer, namely *genfloor, genrnd* and *modrnd*, have been analysed. The quantizer *genrnd* is a generalised round-operator with a freely selectable offset, $\alpha$. It performs an interval shift by $\alpha$ during quantization which simplifies reconstruction of a signal. This type of quantizer is present in ITU Recommendation H.263 and in the current version of ITU Recommendation H.26L. Although *genrnd* has the embedded property under certain conditions, it leads to a larger alphabet of the residual and in turn to an overall increase in entropy.

The quantizer *genfloor* avoids the disadvantage of having too large an alphabet of the residual and still leads to a comparable MSE. The difference is that, rather than shifting the quantizer interval the reconstruction value is placed somewhere in the middle of the quantizer interval.

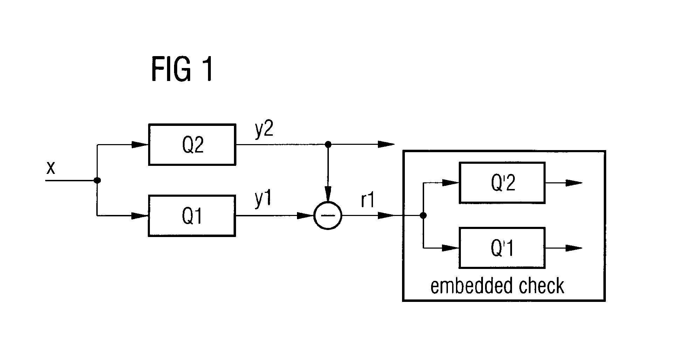

In the definition of an embedded quantizer discussed above, the difference between the original signal, x, as quantized by a first quantizer and the same original signal as quantized by a second quantizer is denoted the residue, r1. The first quantizer, Q1, quantizes the input value x at a predetermined quantization level, $q_1$, and likewise the second quantizer, Q2, quantizes x at a second, different, predetermined quantization level, $q_2 = n*q_1$, where n is an natural number. Figure 1 illustrates this pair of quantizer units, Q1 and Q2. The residue is itself fed through a second pair of quantizer units, Q'1 and Q'2, identical to the first pair. The test for embeddedness is therefore whether the output from the Q'2 quantizer is '0' and the output from the Q'1 quantizer is 'r1'.

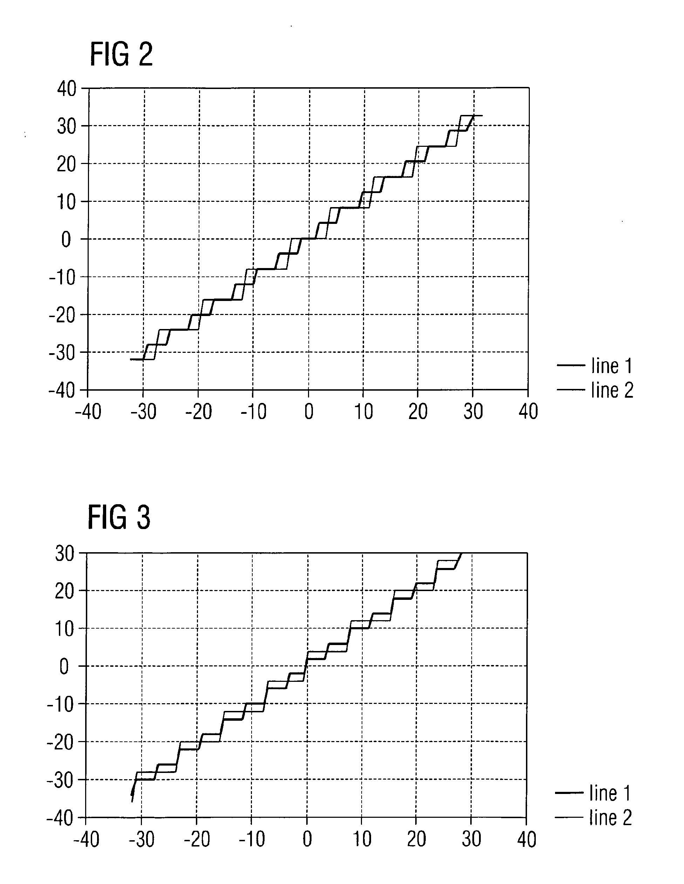

Figures 2 and 3 show comparable graphs of the effect of the quantizers in the H.263/L standard and the effect of a modified quantizer having embedded intervals respectively. It will be noted that that quantizer 2 in Figure 3 encompasses two intervals of quantizer 1 whereas, in Figure 2, quantizer 2 encompasses three intervals of quantizer 1.

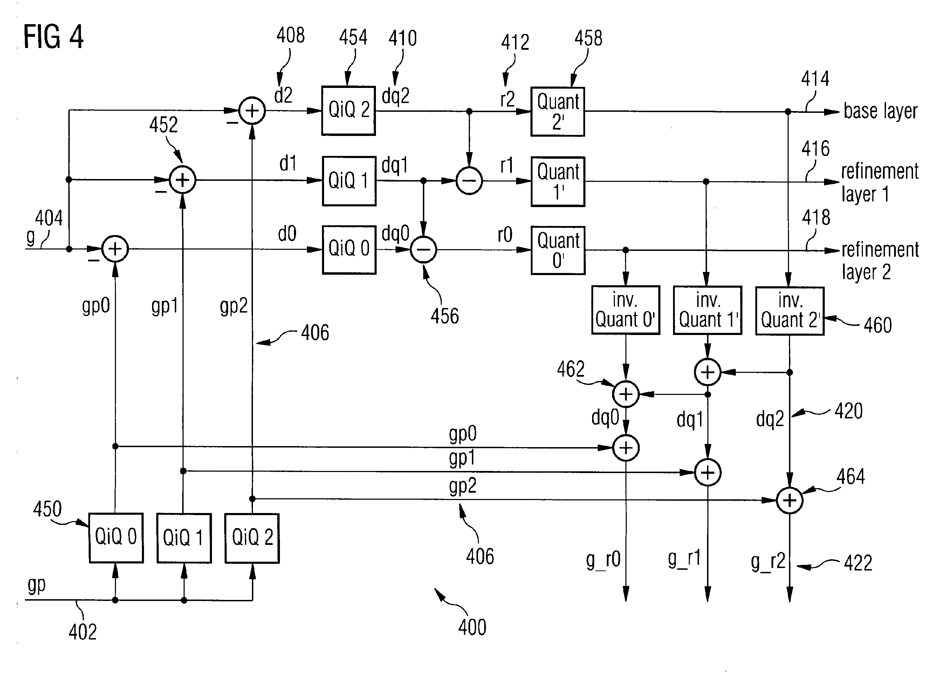

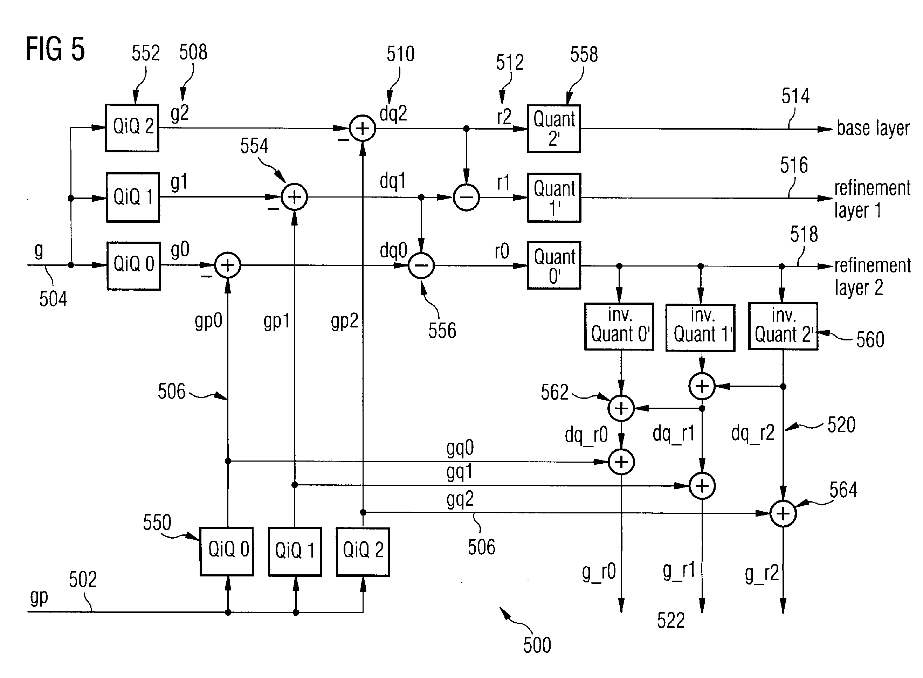

The block diagrams in Figure 4 and Figure 5 show two variant codec systems, System A and System B respectively. In this example, it is assumed that the input signal $g$ and the prediction signal $gp$ are positive integers: $g \in [0; 255]$ and $gp \in [0; 255]$.

Note that in Figures 4 and 5, the suffix '2' denotes base layer quantization, having the "coarsest" quantization level and the largest quantization step size. Likewise the suffix '0' denotes second refinement layer quantization, which has the "finest" quantization level and the smallest quantization step size. The suffix '1' denotes first refinement layer quantization, with a quantization level coarser than the latter layer, but finer than the former, and a corresponding intermediate quantization step size.

In Figure 4, the prediction signal 402 is input to each of a plurality of prediction quantizers 450. Each prediction quantizer quantizes the same input signal but with a different quantization step sizes thereby generating a corresponding plurality of quantized prediction signals; $gp0, gp1, gp2$ 406. The quantized prediction signals 406 are fed to adders 452 and also to adders 464.

At adders 452, the quantized prediction signals 406 are subtracted directly from the input signal 404. The adders 452 result in a plurality of prediction error values $d0, d1, d2$ 408, corresponding to the different quantization step sizes applied to the prediction signal. The prediction error values 408 are then input into a plurality of prediction error quantizers 454.

Each prediction error quantizer 454 generates a respective quantized prediction error value $dq0, dq1, dq2$ 410. A plurality of residues 412, or residuals, is then calculated by taking the difference between quantized prediction error values of neighbouring quantization layers. The residues are calculated at subtractors 456.

The residue $r2$ of $dq2$ is equal to $dq2$ itself. The residue $r1$ of $dq1$ is given by the difference between $dq2$ and $dq1$. Similarly the residue $r0$ of $dq0$ is given by the difference between $dq1$ and $dq0$. The residues 412 are then input into a corresponding plurality of residue quantizers 458. These quantizers output only an index (or so called "levels") to the quantizer interval corresponding to the amplitude of the input signal. The output of the residue quantizers 458 gives plurality of quantized residue signals 414,416,418, which correspond to base layer, first refinement layer and second refinement layer respectively.

Based on the indexes (levels) the units 460 reconstruct the input value taking into account quantiser specific offsets $\alpha$ .The quantized prediction errors can be reconstructed by: applying a plurality of reconstruction units 460, i. e. inverse quantizers; taking the rescaled residues and reconstructing the quantized prediction error values $dq0, dq1, dq2$ 420 at adders 462. These quantized prediction error values 420 are then added to the quantized prediction signals $gp0, gp1, gp2$ 406 at the adders 464. The resulting signals 422 being a fully reconstructed version of the input signal 404 at respective levels of refinement.

The codec system illustrated in Figure 5, bears some resemblance to the Figure 4 system. Here, however, the order of events is slightly different: in System B, the input signal is quantized at each of the quantization levels *before* the quantized prediction signals are subtracted.

Figure 5 may be described more thoroughly as follows. An input signal 504 is fed into a plurality of input quantizers 552. Each input quantizer 552 quantizes the same input signal 504 but with a different quantization step size thereby generating a corresponding plurality of quantized input signals $g0, g1, g2$ 508.

In a parallel step, a prediction signal 502 is input to each of a plurality of prediction quantizers 550. Each prediction quantizer quantizes the same input signal but with a different quantization step sizes thereby generating a corresponding plurality of quantized prediction signals; $gp0, gp1, gp2$ 506. The quantized prediction signals 506 are fed to adders 554 and also to adders 564.

At adders 554, the quantized prediction signals 506 are subtracted from respective quantized input signals 508. The adders 554 result in a plurality of quantized prediction error values $dq0, dq1, dq2$ 510, corresponding to the different quantization step sizes applied to the prediction signal and the input signal. The quantized prediction error values 510 are then input into a plurality of prediction error quantizers 454.

A plurality of residues 512, or residuals, is then calculated by taking the difference between quantized prediction error values of neighbouring quantization layers, the residues being calculated at subtractors 556.

The same relationship exists between the residues $r0,r1,r2$ 512 and the quantized prediction errors $dq0, dq1, dq2$ 510 as existed in Figure 4. The residues 512 are then input into a corresponding plurality of residue quantizers 558. The output of the residue quantizers 458 gives plurality of quantized residue signals 514,516,518, which correspond to base layer, first refinement layer and second refinement layer respectively.

The quantized residues can be rescaled by: applying a plurality of rescalers 560, i.e. inverse quantizers; taking the rescaled residues and reconstructing the quantized prediction error values $dq0, dq1, dq2$ 520 at adders 562. These quantized prediction error values 520 are then added to the quantized prediction signals $gp0, gp1, gp2$ 506 at the adders 564. The resulting signals 522 being a fully reconstructed version of the input signal 504 at respective levels of refinement.

It should be noted that the quantizer function used to quantize the input may differ from the quantizer function applied to the residual $r_i$ as long as the residuals can be reconstructed perfectly.

Taking the earlier discussion of the requirements for optimal SNR scalability into account, a combination of quantizers and processing order is sought which: firstly enables the residual, r, to show embedded characteristics,; secondly,minimises the MSE of the prediction error, d ; and finally, reconstructs the quantized prediction error perfectly.

The first (embedded residue) criterion requires that the prediction signal, too, is embedded. This constraint in turn ensures that the reconstructed image, $g_r$ must be embedded as well. The system characteristics obtained by combining different processing orders with different quantizers are summarised in Table 2.

The offset values of the input signal quantizers have been set to $\alpha = 0.5$ as have the prediction signal quantizers. The offset value of the quantizers applied to the residual is set to $\alpha = 0$ for *genfloor.*

Table 2

| criteria | System A | | System B | |
|---|---|---|---|---|
| | *genrnd* | *genfloor* | *genrnd* | *genfloor* |
| $g_p$ embedded | no | yes | no | yes |
| $Q_i(g) - Q_i(gp) = Q_i(d_i)$ | yes | no | yes | yes |
| $r_i$ embedded | no | no | no | yes |
| $Q_i(d_i) = d_{ri}$ | yes | no | yes | yes |
| $Q_i(g) = g_{ri}$ | yes | no | yes | yes |
| $g_{r_i}$ embedded | no | yes | no | yes |

The results indicate that for certain quantizers (*genfloor*) arranged in a certain processing order (that of System B as illustrated in Figure 5), an optimal SNR scalable coding scheme can be constructed.

**Claims**

1. A codec system for encoding input data (504) at a plurality of different quantization levels, the codec system comprising:

   input quantizing means (552) which processes said input data and generates a plurality of quantized input signals g0, g1, g2 (508), each of said quantized signals (508) having been quantized at a corresponding quantization level;
   prediction means which generates a prediction signal (502);
   prediction quantizing means (550), which processes the prediction signal (502) and generates a plurality of quantized prediction signals gp0, gp1, gp2 (506);
   first adding means (554) for calculating prediction error values dq0, dq1, dq2 (510) corresponding to the different quantization levels applied to the prediction signal and the input signal;
   second adding means (556) for calculating residuals r0, r1, r2 (512); and
   residue quantizing means (558) for quantizing the residuals r0, r1, r2 (512) thereby generating a plurality of quantized residue signals (514, 516, 518), which correspond to the plurality of different quantization levels;
   the codec system **characterised in that**

   the first adding means (554) calculates the prediction error values from the difference between the quantized input signals g0, g1, g2 (508) and the quantized prediction signals gp0, gp1, gp2 (506).

2. A codec system as claimed in Claim 1, wherein the input quantizing means (552) and prediction quantizing means (550) are implemented in a shared quantizer arrangement, thereby ensuring that the prediction signal (502) and the input signal (504) are quantized in accordance with an identical quantization algorithm for each successive quantization levels.

3. A codec system as claimed in Claims 1 or 2, wherein the input quantizing means (552) uses a genfloor quantization algorithm, thereby ensuring each residual r0, r1, r2 (512) is embedded.

4. A codec system as claimed in Claim 3, wherein the residue quantizing means (558) also uses the genfloor quantization algorithm, thereby allowing perfect reconstruction of the residuals.

5.  A codec system as claimed in any of the preceding claims, wherein the prediction means minimises the mean squared error of the prediction error dq0, dq1, dq2 (510), thereby ensuring that the quantized prediction error is reconstructed perfectly.

6.  A codec system as claimed in Claim 5, wherein, for every given quantization level (516, 518) above a base quantization level (514), the prediction means uses the residue signal of the next lower quantization level (514, 516) as the prediction signal (502) for the given quantization level.

7.  A decoding system for decoding data encoded by codec system as claimed in any of the preceding claims, the codec system further comprising:

    rescaling means for rescaling the quantized residue signals (514, 516, 518);
    third adding means (562) for calculating reconstructed prediction error values dq_r0, dq_r1, dq_r2 (520) from the rescaled residue signals; and
    fourth adding means (564) for adding the reconstructed prediction error values dq_r0, dq_r1, dq_r2 (520) to respective quantized prediction signals gp0, gp1, gp2 (506) thereby generating a plurality of fully reconstructed signals (522) which correspond to the input signal (504) at respective levels of refinement.

8.  A decoding system as claimed in Claim 7, wherein the rescaling means rescales the quantized residue signals by applying a mapping function corresponding to the residue quantizing means employed.

9.  A decoding system as claimed in Claim 7 or 8, wherein the third adding means (562) reconstructs the original prediction error values dq_r0, dq_r1, dq_r2 (520) by accumulating the rescaled residue signals of all lower quantization levels.

10. A method of encoding an input data stream (504) at a plurality of different quantization levels, the method comprising:

    a first quantizing step in which said input data is processed and a plurality of quantized input signals g0, g1 g2 (508) is generated, each of said quantized signals (508) having been quantized at a corresponding quantization level;
    a prediction step in which a prediction signal (502) is generated;
    a second quantizing step, in which the prediction signal (502) is processed and a plurality of quantized prediction signals gp0, gp1, gp2 (506) are generated;
    a first adding step in which prediction error values dq0, dq1, dq2 (510) are calculated, respective prediction error values corresponding to the different quantization levels applied to the prediction signal and the input signal;
    a second adding step in which residuals r0, r1, r2 (512) are calculated from the prediction error values (510); and
    a third quantizing step in which the residuals r0, r1, r2 (512) are quantized, thereby generating a plurality of quantized residue signals (514, 516, 518), which correspond to the plurality of different quantization levels; the method **characterised in that**

    the first adding step comprises calculating the prediction error values from the difference between the quantized input signals g0, g1, g2 (508) and the quantized prediction signals gp0, gp1, gp2 (506).

11. A method as claimed in Claim 10, wherein both the first and second quantizing steps use a genfloor quantization algorithm, thereby ensuring each residual r0, r1, r2 (512) is embedded.

12. A method as claimed in Claim 11, wherein the residue quantizing means (558) also uses the genfloor quantization algorithm, thereby allowing perfect reconstruction of the residuals.

13. A method as claimed in any of Claims 10, 11 or 12, wherein the prediction step comprises minimising the mean squared error of the prediction error dq0, dq1, dq2 (510), thereby ensuring that the quantized prediction error is reconstructed perfectly.

**14.** A method as claimed in Claim 13, wherein, for every given quantization level (516, 518) above a base quantization level (514), the prediction step includes using the residue signal of the next lower quantization level (514, 516) as the prediction signal (502) for the given quantization level.

**15.** A method for decoding data encoded in accordance with the method claimed in any of Claims 10 to 14, the decoding method comprising:

a rescaling step in which the quantized residue signals (514, 516, 518) are rescaled;

a third adding step in which reconstructed prediction error values dq_r0, dq_r1, dq_r2 (520) are reconstructed from the rescaled residue signals; and

a fourth adding step in which the reconstructed prediction error values dq_r0, dq_r1, dq_r2 (520) are added to respective quantized prediction signals gp0, gp1, gp2 (506) thereby generating a plurality of fully reconstructed signals (522) which correspond to the input signal (504) at respective levels of refinement.

**16.** A method as claimed in Claim 15, wherein the rescaling step includes applying a mapping function corresponding to the residue quantizing means employed.

**17.** A method as claimed in Claim 15 or 16, wherein the third adding step reconstructs the original prediction error values dq_r0, dq_r1, dq_r2 (520) by accumulating the rescaled residue signals of all lower quantization levels.

# FIG 1

## FIG 2

- line 1
- line 2

## FIG 3

- line 1
- line 2

FIG 4

EP 1 359 762 A1

FIG 5

EP 1 359 762 A1

European Patent Office

**EUROPEAN SEARCH REPORT**

Application Number

EP 02 00 9885

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | P. AMON, K. ILLGNER, J. PANDEL: "SNR Scalable Layered Video Coding" PROCEEDINGS OF THE 2002 INTERNATIONAL PACKET VIDEO WORKSHOP (PV2002), [Online] 24 - 26 April 2002, pages 1-8, XP002221865 Pittsburgh, USA Retrieved from the Internet: <URL:http://pv2002.ece.cmu.edu/papers/59-e thpsnsons.pdf> [retrieved on 2002-11-21] * page 1 - page 3, paragraph 2.1 * * page 3 - page 4, paragraph 2.2 * * page 5, paragraph 3 - page 6 * * figures 1-4 * --- | 1-17 | H04N7/26 H04N7/50 |
| Y | US 4 827 338 A (GERARD EUDE) 2 May 1989 (1989-05-02) * column 8, line 46 - column 10, line 2 * * figure 4 * --- | 1-17 | |
| A | P. AMON, G. BASE, K. ILLGNER, J. PANDEL : "Efficient coding of synchronized H.26L streams" ITU/SG 16/QUESTION 6/VIDEO CODING EXPERTS GROUP (VCEG), [Online] 20 September 2001 (2001-09-20), XP002221866 14th Meeting, Santa Barbara, USA, 24-27 Sep. 2001 Retrieved from the Internet: <URL:http://standard.pictel.com/ftp/video-site/0109_San/VCEG-N35.doc> [retrieved on 2002-11-21] * the whole document * --- | 1-17 | TECHNICAL FIELDS SEARCHED (Int.Cl.7) H04N |

-/--

The present search report has been drawn up for all claims

| Place of search | Date of completion of the search | Examiner |
|---|---|---|
| THE HAGUE | 21 November 2002 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 00 9885

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WU F ET AL: "DCT-prediction based progressive fine granularity scalable coding" PROCEEDINGS. INTERNATIONAL CONFERENCE ON IMAGE PROCESSING, 10 September 2000 (2000-09-10), pages 556-559, XP002165186 * page 557 - page 558, paragraph 3 * * figure 2 * | 1-17 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 21 November 2002 | Lombardi, G |

EPO FORM 1503 03.82 (P04C01)

**EP 1 359 762 A1**

## ANNEX TO THE EUROPEAN SEARCH REPORT
## ON EUROPEAN PATENT APPLICATION NO.

EP 02 00 9885

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2002

| Patent document cited in search report | | Publication date | Patent family member(s) | | Publication date |
|---|---|---|---|---|---|
| US 4827338 | A | 02-05-1989 | FR | 2589020 A1 | 24-04-1987 |
| | | | DE | 3674788 D1 | 08-11-1990 |
| | | | EP | 0247075 A1 | 02-12-1987 |
| | | | WO | 8702854 A1 | 07-05-1987 |
| | | | JP | 2961661 B2 | 12-10-1999 |
| | | | JP | 63501257 T | 12-05-1988 |

For more details about this annex : see Official Journal of the European Patent Office, No. 12/82